# EUROPEAN PATENT APPLICATION

(11) **EP 4 202 496 A1**
(43) Date of publication of application: **28.06.2023**
(21) Application number: 21216548.4
(22) Date of filing: 21.12.2021
(51) Int. Cl.: G01S 17/86, G01S 17/931, B60Q 1/00

(54) **AUTOMOTIVE LIGHTING ARRANGEMENT AND AUTOMOTIVE VEHICLE**

(71) Applicant: Valeo Vision, 93012 Bobigny Cedex (FR)
(72) Inventor: MIMOUN, Mickael, 93012 BOBIGNY (FR); RENAUD, Pierre, 93012 BOBIGNY (FR); PLANCHE, Gregory, 93012 BOBIGNY (FR); EL IDRISSI, Hafid, 93012 BOBIGNY (FR)
(74) Representative: Valeo Visibility

(57) **Abstract**

The present invention refers to an automotive lighting arrangement comprising a first solid-state light source (2) configured to emit light intended to contribute to a first luminous function, at least a second solid-state light source (5) configured to emit light intended to contribute to at least a second luminous function, at least an optical element (6, 8) intended to project the light of the first solid-state light source and of the second solid-state light source (5), a first luminous sensor (4) configured to acquire a portion of a reflection of the light emitted by the first solid-state light source and projected by the optical element, a second luminous sensor (9) configured to acquire a portion of a reflection of the light emitted by the second solid-state light source and projected by the optical element and processing means (3) configured to control the operation of the light sources (2, 5) and to receive data from the luminous sensors (4, 9).

## Description

This invention is related to the field of automotive lighting devices, and more particularly, to the ones used to detect objects surrounding the vehicle.

Driving assistance comprises the use of sensors to inform the driver (or to directly inform the vehicle) of objects surrounding the vehicle. This is extremely useful for autonomous driving, but also to help a potential driver to avoid obstacles on the road, in the case of low visibility conditions (due to weather conditions, deficient lighting surrounding the vehicles or the vehicle going reverse, for example).

To achieve this goal, sensors play a crucial role, since they receive the information from the exterior of the vehicle, containing the data that will be interpreted in order to create a map of the surrounding objects.

There are many different sensors which are intended to accomplish this mission. Most of them use ultrasound, with acoustic pulses. Cameras are also adapted to acquire infrared or visible ambient light.

The present invention provides an alternative solution for the problem of by means of an automotive lighting arrangement which comprises
- a first light source configured to emit light in a first wavelength intended to contribute to a first lighting function;
- at least a second light source configured to emit light in at least a second wavelength, the at least one second solid-state light source being intended to contribute to at least a second lighting function;
- At least an optical element intended to project the light of the first light source and of the second light source;
- a first luminous sensor configured to acquire a portion of a reflection of the light emitted by the first light source and projected by the optical element;
- a second luminous sensor configured to acquire a portion of a reflection of the light emitted by the second light source and projected by the optical element; and
- processing means configured to control the operation of the light sources and to receive data from the luminous sensors.

This lighting device uses the light emitted by the light sources which are in charge of the driving lighting or signalling functions in order to obtain information about the surrounding objects. There is therefore no need to use an additional light source, or ultrasound devices. The same device which may be used for lighting functions (such as a Low Beam LB, a High Beam HB, a Daytime Running Light DRL, a Position Light PL, a Stop Light, a Reverse Light, a Corner Light CL, or a Turn Indicator TI) may also be used for objects detecting. Further, in this case there are two different light sources, which contribute to different lighting functions. Two different luminous sensors are in charge of detecting the light reflected by each of the two light sources. These two different LEDs may be located in the same lighting device or in different lighting devices. This makes the system more able to capture different details of the surrounding objects.

In some particular embodiments, the light sources are solid-state light sources.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

In some particular embodiments, the processing means is further configured to activate or deactivate the operation of the first luminous sensors and/or of the second luminous sensor.

The ability of activating and deactivating some of the two emission-detection systems allows the device to save energy and processing load when such detail is not necessary.

In some particular embodiments, the lighting device further comprises a third and/or a fourth solid-state light sources intended to contribute to a third and/or a fourth lighting function.

The lighting device may be in charge of different lighting and signalling functions, and only one of these functions may be used together with the luminous sensor for the detection of outer objects.

In some particular embodiments, the first lighting function comprises one of a daytime running light, a front-position light, a passing-beam headlamp function or a driving-beam headlamp function.

These functions, since they are front lighting functions and are usually active while the vehicle is being used, are especially suitable for the object detection.

In some particular embodiments, the light projected by the at least one second lighting function is oriented in a different direction from the light projected by the first lighting function.

These functions are located in a different orientation as the main headlamp, thus providing the processor unit with information which is complementary to the one of the first light source.

In some particular embodiments, the lighting arrangement comprises a lighting device which comprises the first light source, the at least second light source, the at least one optical element, the first luminous sensor, the second luminous sensor and the processing means.

In these cases, the same lighting device comprises both light sources and both sensors, which is useful to alternate between functions or to capture different details of the objects surrounding the vehicle.

This is also useful to provide a redundancy in the event that one of the systems fails. This is advisable in automotive devices and this embodiment is a good way of achieving this goal.

In some particular embodiments, the at least one second lighting function comprises one of passing-beam headlamp function and driving-beam headlamp function.

These additional lighting functions are usually present in the automotive lighting devices.

In some particular embodiments, the first wavelength and the second wavelength are different.

This option is adequate when the two light sources are located in the same orientation (for example, as different functionalities of the same headlamp). In this case, the different wavelength is enough so that each luminous sensor is able to receive and process the corresponding light.

In some particular embodiments, the arrangement comprises
- a first lighting device comprising the first light source, a first optical element and the first luminous sensor;
- a second lighting device comprising the at least second light source, a second optical element and the second luminous sensor; and
- the processing means.

In these cases, where the light sources and the photodiodes are arranged in different lighting devices, each device allows the capturing of information in a different direction, which is useful for obtaining a more complete scenario of the surroundings of the vehicle.

In some particular embodiments, the at least one second lighting function comprises one of rear position lamp function and clearance lamp function.

These are good examples of lighting functions oriented in a different direction from the main headlamp, which are useful to provide details that the light projected by the headlamp may not cover.

In some particular embodiments, the first wavelength and the second wavelength are the same.

This option is suitable when the light sources are oriented in different directions and there is no possibility of confusing them.

In some particular embodiments, the solid-state light sources comprise light emitting diodes or laser diodes.

These types of light sources are widely used in automotive vehicles for driving lighting and signalling. With the present invention, the same light sources may also be used for objects detection.

In some particular embodiments, the device further comprises an image sensor and wherein the processing means are adapted to modify the power of the light sources as a consequence of the information received by the image sensor.

In a second inventive aspect, the invention provides an automotive vehicle comprising an automotive lighting device according to the first inventive aspect.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

[Fig. 1] shows a general perspective view of an automotive lighting device according to the invention installed in an automotive vehicle.

[Fig. 2] shows a detailed view of some elements of an automotive lighting device according to the invention.

In these figures, the following reference numbers are used for each of the following elements:
- 1: Headlamp
- 2: First group of LEDs
- 3: Processing unit
- 4: First photodiode
- 5: Second group of LEDs
- 6: Clearance lens
- 8: Outer lens
- 9: Second photodiode
- 10: Clearance lamp
- 11: Headlamp
- 18: Light guide
- 100: Automotive vehicle

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

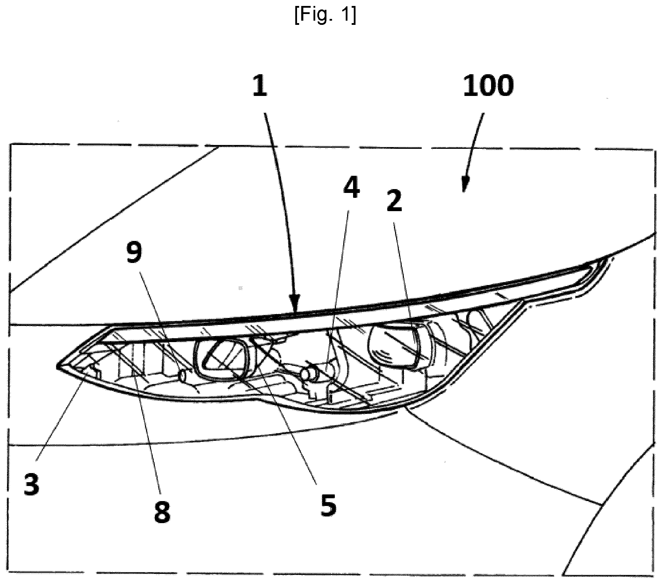

Figure 1 shows a first example of a headlamp 1 according to the invention installed in an automotive vehicle 100.

In this figure, the following elements are seen
- a first group of LEDs 2 configured to emit light intended to contribute to daytime running lamp function;
- a second group of LEDs 5 configured to emit light in a second wavelength different from the first wavelength, the second group of LEDs being intended to contribute to a passing-beam headlamp function;
- an outer lens 8 intended to project the light of the first group of LEDs 2 and the light of the second group of LEDs 5;
- a first photodiode 4 configured to acquire a portion of a reflection of the light projected by the optical element in the first wavelength;
- a second photodiode 9 configured to acquire a portion of a reflection of the light projected by the optical element in the second wavelength; and
- a processing unit 3 configured to control the operation of the LEDs 2, 5, to receive data from the photodiodes 4, 9 and to control the operation of the photodiodes 4, 9.

The outer lens 8 projects light emitted by the first group of LEDs 2 outside the headlamp 1, and this light is reflected by outer objects and captured by the first photodiode 4, which sends the information about captured light to the processing unit 3 so that these outer objects are detected. The processing unit 3 is furthermore configured to receive power from a power source and prepare the frequency and shape of the light to be emitted by the first group of LEDs 2.

Further, the outer lens 8 projects light emitted by the second group of LEDs 5 outside the headlamp 1, and this light is reflected by outer objects and captured by the second photodiode 4, which sends the information about captured light to the processing unit 3 so that these outer objects are detected. The processing unit 3 is furthermore configured to receive power from a power source and prepare the frequency and shape of the light to be emitted by the second group of LEDs 5. There is a difference between the light projected by the outer lens coming from the first group of LEDs and the light projected by the outer lens coming from the second group of LEDs. In this case, the difference is related to the wavelength of the emitted light, so that each photodiode may easily distinguish between the reflected light coming from the corresponding group of LEDs (and detect it) and the reflected light coming by the other group of LEDs (and disregard it).

This first wavelength may be the common one, used by blue lights, around 490 nm. The second LED group 5, intended to carry out a different lighting function, operates in a different wavelength, such as 440 nm.

In this case, the control means is in charge of activating and de-activating the first or second photodiodes. This is made in the event that only the information of one of them is enough. In the event of a traffic jam, the information provided by the reflected light coming from the first group of LEDs 2 (daytime running lamp) is enough, since the distance with respect to the next vehicle is low. In other circumstances, the information of the two groups of LEDs 2, 5 may be necessary (in crowded highways, in urban environments...) and in other cases, it may be enough with the information of the light reflected from the second group of LEDs 5. Hence, the control unit 3 may activate or deactivate the reception of information in the corresponding photodiode to save energy and not to overload the system with useless information.

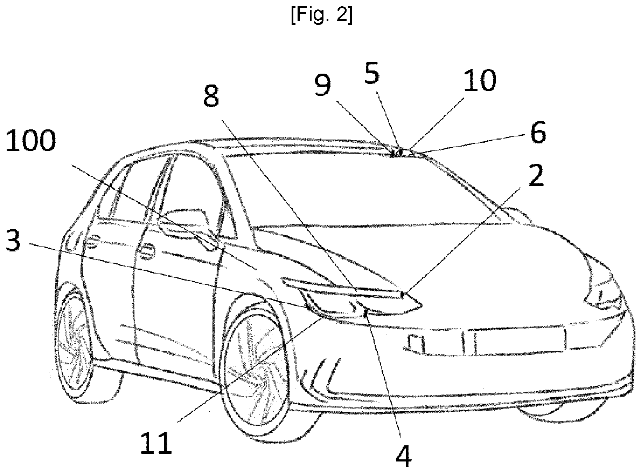

Figure 2 shows an automotive vehicle with a different arrangement comprising two automotive lighting devices: a headlamp 11 and a clearance lamp 10.

The headlamp 11 comprises the following elements:
- a first group of LEDs 2 configured to emit light intended to contribute to daytime running lamp function;
- a lightguide 18 intended to project the light of the first group of LEDs 2; and
- a first photodiode 4 configured to acquire a portion of a reflection of the light projected by the first group of LEDs 2.

The clearance lamp 10 comprises in turn the following elements:
- a second group of LEDs 5 configured to emit light intended to contribute to daytime running lamp function;
- a lens 6 intended to project the light of the second group of LEDs 5;
- a second photodiode 9 configured to acquire a portion of a reflection of the second group of LEDs 5.

The arrangement also comprises a processing unit 3 configured to control the operation of the LEDs 2, 5, to receive data from the photodiodes 4, 9 and to control the operation of the photodiodes 4, 9.

The lightguide 18 projects light emitted by the first group of LEDs 2 outside the lighting device 1, and this light is reflected by outer objects and captured by the first photodiode 4, which sends the information about captured light to the processing unit 3 so that these outer objects are detected. The processing unit 3 is furthermore configured to receive power from a power source and prepare the frequency and shape of the light to be emitted by the first group of LEDs 2.

Further, in the clearance lamp 10, the lens 6 projects light emitted by the second group of LEDs 5 outside this lamp 10, and this light is reflected by outer objects and captured by the second photodiode 9, which sends the information about captured light to the processing unit 3 so that these outer objects are detected. The processing unit 3 is furthermore configured to receive power from a power source and prepare the frequency and shape of the light to be emitted by the second group of LEDs 5.

In this case, the processing unit 3 is in charge of activating and de-activating the first or second photodiodes. This is made in the event that only the information of one of them is enough. In the event of a traffic jam, the information provided by the reflected light coming from the first group of LEDs 2 (daytime running lamp) is enough, since there is no need to obtain further information provided by the clearance lamp. In other circumstances, the information of the two groups of LEDs 2, 5 may be necessary (in crowded highways, in urban environments...) and in other cases, it may be enough with the information of the light reflected from the second group of LEDs 5. Hence, the control unit 3 may activate or deactivate the reception of information in the corresponding photodiode to save energy and not to overload the system with useless information.

In some embodiments, there is a camera which is in charge of receiving images from the exterior of the vehicle. This camera provides the processing unit with information about traffic conditions, road signalling, tunnelling or any other driving circumstance. The processing means is therefore configured to adapt the power supplied to the light sources, so that this power is adapted to the driving conditions.

This invention may be used in a matrix configuration such as a high-resolution module, having a resolution greater than 2000 pixels. However, no restriction is attached to the technology used for producing the projection modules.

A first example of this matrix configuration comprises a monolithic source. This monolithic source comprises a matrix of monolithic electroluminescent elements arranged in several columns by several rows. In a monolithic matrix, the electroluminescent elements can be grown from a common substrate and are electrically connected to be selectively activatable either individually or by a subset of electroluminescent elements. The substrate may be predominantly made of a semiconductor material. The substrate may comprise one or more other materials, for example non-semiconductors (metals and insulators). Thus, each electroluminescent element/group can form a light pixel and can therefore emit light when its/their material is supplied with electricity. The configuration of such a monolithic matrix allows the arrangement of selectively activatable pixels very close to each other, compared to conventional light-emitting diodes intended to be soldered to printed circuit boards. The monolithic matrix may comprise electroluminescent elements whose main dimension of height, measured perpendicularly to the common substrate, is substantially equal to one micrometre.

The monolithic matrix is coupled to the control centre so as to control the generation and/or the projection of a pixelated light beam by the matrix arrangement. The control centre is thus able to individually control the light emission of each pixel of the matrix arrangement.

Alternatively to what has been presented above, the matrix arrangement may comprise a main light source coupled to a matrix of mirrors. Thus, the pixelated light source is formed by the assembly of at least one main light source formed of at least one light emitting diode emitting light and an array of optoelectronic elements, for example a matrix of micro-mirrors, also known by the acronym DMD, for "Digital Micro-mirror Device", which directs the light rays from the main light source by reflection to a projection optical element. Where appropriate, an auxiliary optical element can collect the rays of at least one light source to focus and direct them to the surface of the micro-mirror array.

Each micro-mirror can pivot between two fixed positions, a first position in which the light rays are reflected towards the projection optical element, and a second position in which the light rays are reflected in a different direction from the projection optical element. The two fixed positions are oriented in the same manner for all the micro-mirrors and form, with respect to a reference plane supporting the matrix of micro-mirrors, a characteristic angle of the matrix of micro-mirrors defined in its specifications. Such an angle is generally less than 20° and may be usually about 12°. Thus, each micro-mirror reflecting a part of the light beams which are incident on the matrix of micro-mirrors forms an elementary emitter of the pixelated light source. The actuation and control of the change of position of the mirrors for selectively activating this elementary emitter to emit or not an elementary light beam is controlled by the control centre.

In different embodiments, the matrix arrangement may comprise a scanning laser system wherein a laser light source emits a laser beam towards a scanning element which is configured to explore the surface of a wavelength converter with the laser beam. An image of this surface is captured by the projection optical element.

The exploration of the scanning element may be performed at a speed sufficiently high so that the human eye does not perceive any displacement in the projected image.

The synchronized control of the ignition of the laser source and the scanning movement of the beam makes it possible to generate a matrix of elementary emitters that can be activated selectively at the surface of the wavelength converter element. The scanning means may be a mobile micro-mirror for scanning the surface of the wavelength converter element by reflection of the laser beam. The micro-mirrors mentioned as scanning means are for example MEMS type, for "Micro-Electro-Mechanical Systems". However, the invention is not limited to such a scanning means and can use other kinds of scanning means, such as a series of mirrors arranged on a rotating element, the rotation of the element causing a scanning of the transmission surface by the laser beam.

In another variant, the light source may be complex and include both at least one segment of light elements, such as light emitting diodes, and a surface portion of a monolithic light source.

## Claims

1. - Automotive lighting arrangement (1, 10, 11) comprising
- a first light source (2) configured to emit light in a first wavelength intended to contribute to a first lighting function;
- at least a second light source (5) configured to emit light in at least a second wavelength, the at least one second light source being intended to contribute to at least a second lighting function;
- At least an optical element (6, 8, 18) intended to project the light of the first light source and of the second solid-state light source (5);
- a first luminous sensor (4) configured to acquire a portion of a reflection of the light emitted by the first light source and projected by the optical element;
- a second luminous sensor (9) configured to acquire a portion of a reflection of the light emitted by the second light source and projected by the optical element; and
- processing means (3) configured to control the operation of the light sources (2, 5) and to receive data from the luminous sensors (4, 9).

2. - Automotive lighting arrangement (1, 10, 11) according to claim 1, wherein the processing means (3) is further configured to activate or deactivate the operation of the first luminous sensors (4) and/or of the second luminous sensor (9).

3. - Automotive lighting arrangement (1, 10, 11) according to any of the preceding claims, wherein the first lighting function comprises one of a daytime running light, a front-position light, a passing-beam headlamp function or a driving-beam headlamp function.

4. - Automotive lighting arrangement (1, 10, 11) according to any of the preceding claims, wherein the light projected by the at least one second lighting function is oriented in a different direction from the light projected by the first lighting function.

5. - Automotive lighting arrangement (1, 10, 11) according to any of the preceding claims, comprising a lighting device (1) which comprises the first light source (2), the at least second light source (5), the at least one optical element (6, 8), the first luminous sensor (4), the second luminous sensor (9) and the processing means (3).

6. - Automotive lighting arrangement (1, 10, 11) according to claim 5, wherein the at least one second lighting function comprises one of passing-beam headlamp function and driving-beam headlamp function.

7. - Automotive lighting arrangement (1, 10, 11) according to any of claims 5 or 6, wherein the first wavelength is different from the second wavelength.

8. - Automotive lighting arrangement (1, 10, 11) according to any of claims 1 to 4, comprising
- - a first lighting device (11) comprising the first light source (2), a first optical element (8) and the first luminous sensor (4);
- - a second lighting device (10) comprising the at least second light source (5), a second optical element (6) and the second luminous sensor (9); and
- - the processing means (3).

9. - Automotive lighting arrangement (1, 10, 11) according to claim 8, wherein the at least one second lighting function comprises one of rear position lamp function and clearance lamp function.

10. - Automotive lighting arrangement (1, 10, 11) according to any of claims 8 or 9, wherein the first wavelength and the second wavelength are the same.

11. - Automotive lighting arrangement (1, 10, 11) according to any of the preceding claims, wherein the light sources are solid-state light sources.

12. - Automotive lighting arrangement (1, 10, 11) according to claim 11, wherein the solid-state light sources comprise light emitting diodes or laser diodes.

13. - Automotive lighting arrangement (1, 10, 11) according to any of the preceding claims, further comprising an image sensor and wherein the processing means are adapted to modify the power of the light sources as a consequence of the information received by the image sensor.

14. - Automotive vehicle (100) comprising an automotive lighting arrangement (1, 10, 11) according to any of the preceding claims.
